# FASCICULE DE BREVET EUROPEEN

(11) **EP 3 169 885 B1**
(45) Date de publication et mention de la délivrance du brevet: **13.11.2019**
(21) Numéro de dépôt: 15736563.6
(22) Date de dépôt: 22.06.2015
(51) Int. Cl.: B60K 11/02, B60R 13/08, F01P 11/10, F01P 5/06

(54) **GROUPE MOTO-VENTILATEUR INCORPORANT UNE BUSE ET UN ÉCRAN THERMIQUE**
LÜFTEREINHEIT MIT EINER DÜSE UND EINEM WÄRMESCHIRM
FAN UNIT COMPRISING A NOZZLE AND A THERMAL SCREEN

(30) Priorité: 15.07.2014 FR 1456775
(43) Date de publication de la demande: 24.05.2017
(73) Titulaire: PSA Automobiles SA, 78300 Poissy (FR)
(72) Inventeur: MARCAIS, Philippe, 78500 Sartrouville (FR); MOIGNARD, Jeremy, F-92390 Villeneuve la Garenne (FR)
(74) Mandataire: Bourguignon, Eric Pascal Jean
(86) Numéro de dépôt international: PCT/FR2015/051657
(87) Numéro de publication internationale: WO 2016/009121

(56) Documents cités:
- EP-A2- 1 650 426
- WO-A2-2011/080561
- JP-A- 2006 291 845
- US-A- 3 854 459
- US-A- 4 018 297
- US-A- 5 626 105

## Description

L'invention porte sur un groupe moto-ventilateur incorporant une buse et un écran thermique, ce groupe moto-ventilateur étant destiné à être associé à un radiateur de moteur thermique d'un véhicule automobile.

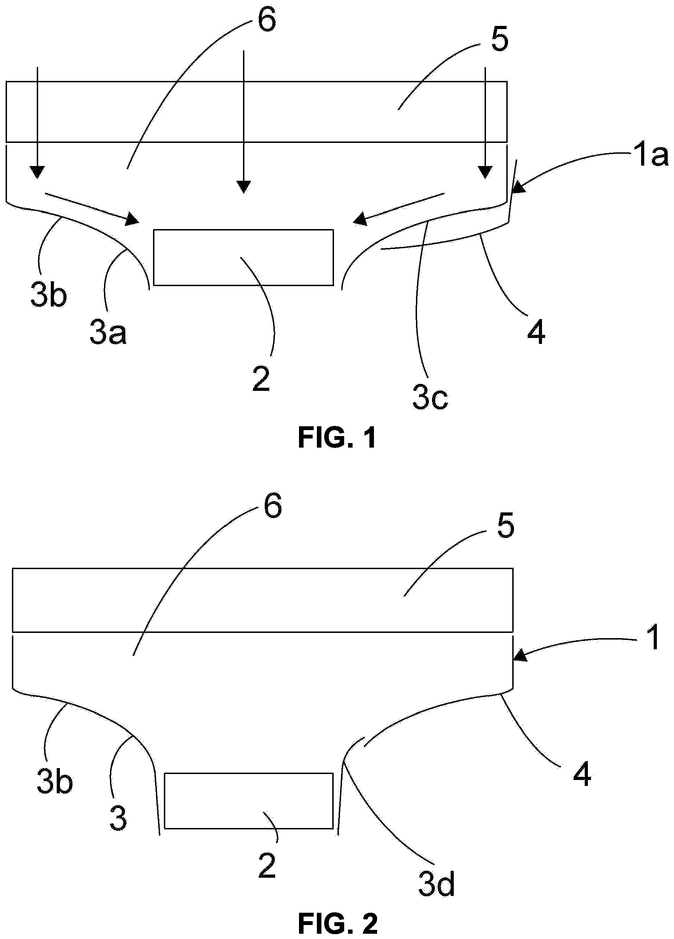

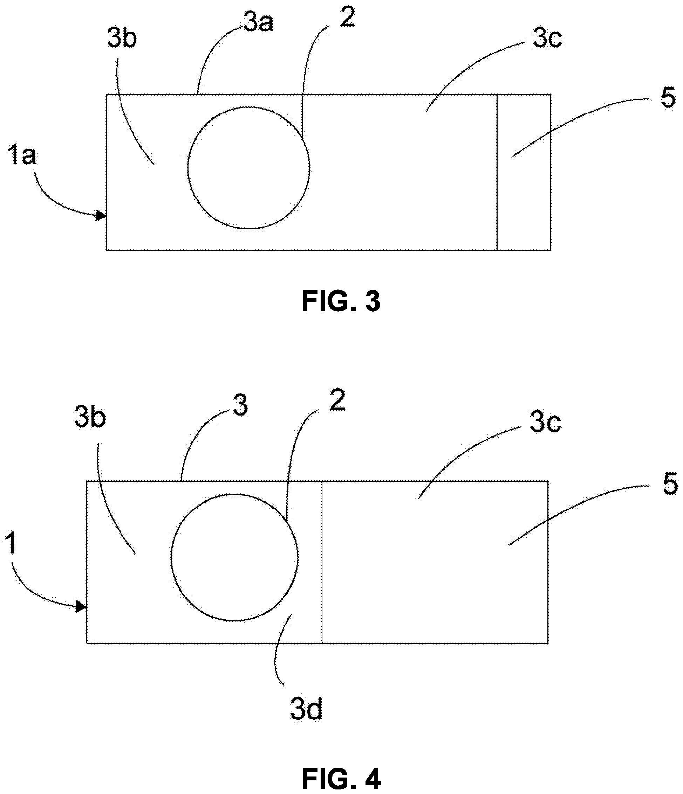

Comme montré aux figures 1 et 3 qui illustrent un groupe moto-ventilateur selon l'état de la technique, un tel groupe moto-ventilateur 1a comprend un moto-ventilateur 2 logé dans une buse 3a en forme d'entonnoir, le moto-ventilateur 2 étant logé dans le bec ou goulet d'étranglement de la buse 3a.

Le groupe moto-ventilateur 1a permet, à faible vitesse du véhicule, d'aspirer de l'air extérieur pour le faire passer au travers d'un radiateur 5 présent pour le refroidissement du liquide de refroidissement d'un moteur thermique dans le but de favoriser les échanges de calories entre le liquide de refroidissement et l'air aspiré.

Il est avantageux de concevoir une telle buse 3a assurant par ses portions 3b et 3c un guidage de l'air pour forcer l'air à passer à travers la plus grande surface d'échangeurs et pour ne pas aspirer de l'air sous capot du véhicule automobile. Une telle buse 3a peut être en matière plastique.

Le ventilateur 2 est disposé dans le bec ou goulet d'étranglement de la buse 3a en forme d'entonnoir en étant encadré d'un côté par une première portion de guidage 3b de l'air et de l'autre par une deuxième portion 3c de guidage qui occupe une grande place dans le groupe moto-propulseur 1a. La buse 3a en présente une ouverture d'une dimension un peu plus petite que la longueur du radiateur 5 associé.

Il est fréquent que, dans un moteur thermique de véhicule automobile, la buse 3a soit à proximité d'une source de chaleur se trouvant sous capot du véhicule, par exemple une ligne d'échappement ou un moteur auxiliaire. Ceci oblige à incorporer au groupe moto-propulseur 1 un écran thermique 4 qui protège la buse 3a de la chaleur, ceci à la figure 1 sous la portion de guidage 3c d'air de la buse 3a.

En effet, sans cet écran thermique 4, la buse 3a en matière plastique pourrait fondre ou être endommagée par la chaleur dégagée par la ligne d'échappement du véhicule automobile.

Cela engendre un coût supplémentaire lié à l'ajout d'un écran thermique 4 dans le groupe moto-propulseur 1 mais aussi une réduction de la prestation aéraulique pour implanter cet écran thermique 4 dans le groupe moto-propulseur 1 ainsi qu'un encombrement supplémentaire du groupe-motopropulseur 1.

Le document JP-A- 2006/291845 décrit un groupe moto-ventilateur avec un bouclier thermique pour la suppression de l'échauffement d'un moteur électrique dû à la chaleur d'un moteur de déplacement. L'écran thermique est supporté par une buse de guidage d'air au ventilateur mais non superposé avec cette buse.

Ce document est donc plus dirigé vers le mode de fixation de l'écran thermique sur la buse que sur le problème engendré par la superposition d'un écran thermique avec une buse de guidage d'air.

Par conséquent, le problème à la base de l'invention est d'éviter les inconvénients engendrés par la superposition d'un écran thermique avec au moins une portion de guidage d'air d'une buse pour un groupe moto-ventilateur destiné à être associé à un radiateur en échange thermique avec le liquide de refroidissement d'un moteur thermique de véhicule automobile.

Pour atteindre cet objectif, il est prévu selon l'invention un groupe moto-ventilateur selon la revendication 1 destiné à être associé à un radiateur d'un moteur thermique de véhicule automobile, le groupe moto-ventilateur comprenant un ventilateur logé dans une buse présentant des portions de guidage d'air, lesdites portions de guidage de la buse étant en matériau polymère, et un écran thermique de protection d'une zone de la buse, tel que la buse n'intègre pas de portion de guidage dans la zone protégée par l'écran thermique, l'écran thermique faisant office de portion de guidage d'air de la buse dans cette zone : la buse intègre l'écran thermique, qui est métallique et qui fait office de portion de guidage d'air de la buse dans cette zone, et qui vient donc « remplacer » localement les parois de la buse qui définissent les portions de guidage.

On comprend par « portion » de guidage une paroi ou un ensemble de parois de la buse délimitant un espace dans lequel va pouvoir circuler de l'air (du gaz) sous l'effet, notamment, du ventilateur, cet espace venant guider/canaliser/défléchir l'air mis en mouvement par le ventilateur.

L'invention propose ainsi d'incorporer l'écran thermique à la buse, l'écran venant remplacer de fait localement les parois de la buse : l'écran est en un matériau résistant thermiquement, notamment en métal, tandis que le reste des parois de guidage de la buse est en matériau plastique. On a ainsi une buse « composite », dont les parois guidant l'air sont partiellement en matériau polymère (plastique), en matériau présentant une résistance thermique modérée, et localement en métal, présentant une haute résistance thermique, de façon à pouvoir supporter la chaleur sans détérioration dans la zone pourvue de parois en métal. On évite d'avoir à gérer une pièce supplémentaire (montage, maintien en position relative par rapport à la buse), puisque l'écran fait maintenant partie de la buse. On peut régler la résistance à la chaleur de la buse en réglant les dimensions (taille, épaisseur, ....) de l'écran thermique ainsi intégré.

L'effet technique résultant de la suppression de la portion de guidage d'air de la buse dans la zone de la buse protégée par l'écran thermique, cet écran de par sa forme permettant le guidage de l'air vers le ventilateur du groupe moto-ventilateur, est de réaliser un gain de masse et une économie de coût par la réduction du volume de la buse plastique. Il est aussi obtenu un gain aéraulique par l'agrandissement de la buse du fait de la suppression de la portion de guidage d'air de la buse dans la zone revêtue par l'écran thermique, ce gain aéraulique étant combiné avec une diminution de l'encombrement du groupe moto-ventilateur d'où un gain auxiliaire en cote d'implantation.

Avantageusement, la buse présente une ouverture prolongée par les portions de guidage d'air se rétrécissant vers un goulet d'étranglement, le ventilateur étant logé dans ledit goulet d'étranglement.

Avantageusement, le goulet est de section sensiblement circulaire.

Avantageusement, le ventilateur occupe en section la totalité du goulet d'étranglement en étant positionné à l'entrée du goulet dirigée vers l'ouverture et en ne laissant entre lui et le goulet que le jeu suffisant à son introduction dans le goulet.

Avantageusement, la zone de protection de la buse par l'écran thermique , de fait, la portion des parois de la buse qui est remplacée par l'écran thermique, s'étend en partant du goulet d'étranglement jusqu'à l'ouverture de la buse. Les parois en métal de la buse s'étendent donc spécifiquement dans cette zone de protection, les autres parois étant en matériau polymère.

Avantageusement, la buse présente une forme dissymétrique.

L'invention concerne aussi un radiateur de véhicule automobile, qui est muni d'un tel groupe moto-ventilateur, le groupe moto-ventilateur étant positionné en vis-à-vis du radiateur.

Avantageusement, l'adaptation du groupe moto-ventilateur aux dimensions du radiateur se fait en adaptant les dimensions de l'écran thermique, les dimensions de la buse restant inchangées. On va donc remplacer une portion plus ou moins grande des parois en polymère de la buse par des parois métallique selon les besoins, selon les sollicitations thermiques, selon l'emplacement et les dimensions de la source de chaleur par rapport à la buse.

L'invention concerne enfin un véhicule automobile à moteur thermique, qui comprend un tel radiateur muni d'un groupe moto-ventilateur, le radiateur étant en échange thermique avec le liquide de refroidissement de son moteur thermique.

Avantageusement, le radiateur est fixé en façade avant du véhicule.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue en coupe transversale d'un radiateur de véhicule automobile muni d'un groupe moto-ventilateur selon l'état de la technique,
- la figure 2 est une représentation schématique d'une vue en coupe transversale d'un radiateur de véhicule automobile muni d'un groupe moto-ventilateur selon la présente invention,
- la figure 3 est une représentation schématique d'une vue de face d'un radiateur de véhicule automobile muni d'un groupe moto-ventilateur selon l'état de la technique, l'écran thermique, destiné à protéger la buse du groupe moto-ventilateur, ayant été ôté à cette figure,
- la figure 4 est une représentation schématique d'une vue de face d'un radiateur de véhicule automobile muni d'un groupe moto-ventilateur selon la présente invention, l'écran thermique, destiné à protéger la buse du groupe moto-ventilateur, ayant été ôté à cette figure.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions et les formes des différents éléments illustrés ne sont pas représentatives de la réalité, en particulier la forme de l'écran thermique.

Les figures 1 et 3 ont déjà été décrites dans la partie introductive de la présente demande.

En se référant aux figures 2 et 4, la présente invention concerne un groupe moto-ventilateur 1 destiné à être associé à un radiateur 5 d'un moteur thermique de véhicule automobile.

De manière connue, le groupe moto-ventilateur 1 comprend un ventilateur 2 logé dans une buse 3 présentant des portions de guidage 3b d'air. Il est prévu un écran thermique 4 de protection d'une zone de la buse 3, par exemple une zone à proximité d'une source de chaleur qui pourrait endommager la buse 3 et la faisant au moins partiellement fondre.

Le groupe moto-ventilateur 1 permet, à faible vitesse du véhicule, d'aspirer l'air pour le faire passer au travers du radiateur 5 dans le but de favoriser les échanges de calories à l'intérieur du radiateur 5 en échange thermique avec le fluide de refroidissement du moteur thermique du véhicule automobile.

Comme il est visible aux figures 2 et 4, le ventilateur 2 du groupe moto-ventilateur 1 ne recouvre pas totalement la surface du radiateur 5 lui faisant face. C'est pourquoi il est utilisé une buse 3 pour permettre un guidage d'air vers le ventilateur 2, afin d'aller rechercher de l'air sur toute la surface du radiateur 5.

Selon une caractéristique essentielle de l'invention, la buse 3 n'intègre pas de portion de guidage dans la zone protégée par l'écran thermique 4, l'écran thermique 4 faisant alors office de portion de guidage d'air de la buse 3 dans cette zone.

En comparant la figure 2 avec la figure 1, il est visible que la portion de guidage 3c d'air de la figure 1 a été supprimée à la figure 3 et que l'écran thermique 4 fait office de zone de guidage sans interposition entre l'écran 4 et l'air convoyé d'une portion de la buse 3. L'écran thermique remplace localement les parois de la buse. L'écran est en métal, les autres parois de guidage de la buse étant en matériau polymère.

En comparant la figure 4 avec la figure 3, auxquelles l'écran thermique n'est pas montré, il est visible que la portion de guidage 3c d'air de la figure 3 a été supprimée à la figure 4, l'absence d'écran thermique laissant apparaître le radiateur 5.

Aux figures 2 et 4, la buse 3 présente une ouverture 6 tournée vers le radiateur 5. Cette ouverture 6 est prolongée par les portions de guidage d'air 3b, 4, l'écran thermique 4 faisant office de portion de guidage. Les portions de guidage d'air 3b, 4 se rétrécissent vers un goulet d'étranglement 3d. C'est dans ce goulet d'étranglement 3d que le ventilateur 2 du groupe moto-ventilateur 1 est logé.

Comme il peut être vu plus particulièrement à la figure 4, le goulet d'étranglement 3d peut être de section sensiblement circulaire, le ventilateur 2 présentant aussi une section sensiblement circulaire.

Toujours comme il peut être vu à la figure 4, le ventilateur 2 peut occuper en section la totalité du goulet d'étranglement 3d en étant positionné à l'entrée du goulot 3d et en ne laissant entre lui et le goulet 3d que le jeu suffisant à son introduction dans le goulet 3d. Le ventilateur 2 est avantageusement positionné juste à l'entrée du goulet d'étranglement 3d, c'est-à-dire vers la zone de jonction des portions de guidage d'air 3b, 4 avec le goulet d'étranglement 3d.

Comme il peut être vu à la figure 2, la zone de protection de la buse 3 par l'écran thermique 4 peut s'étendre en partant du goulet d'étranglement 3d jusqu'à l'ouverture 6 de la buse 3. Une paroi en métal vient donc localement se substituer aux parois en plastique de la buse. La jonction entre la paroi en métal et le reste des parois en plastique peut être prévue de façon étanche ou pas, avec tout moyen de fixation mécanique connu de l'écran au reste de la buse (ou à une pièce de structure de véhicule).

Comme il peut être vu aux figures 2 et 4, la buse 3 peut présenter une forme dissymétrique, le goulet d'étranglement 3d n'étant pas positionné entre deux portions de guidage symétriques. Au contraire, l'ouverture 6 de la buse 3 s'étend plus au-dessus de la portion de guidage réalisée par l'écran thermique 4 qu'au dessus de l'autre portion de guidage 3b. Par exemple, comme il est visible à la figure 2, l'écran thermique 4 peut être moins incliné vers l'ouverture 6 que l'autre portion de guidage 3b.

Aux figures 2 et 4 est montré un radiateur 5 de véhicule automobile muni d'un groupe moto-ventilateur 1 tel que précédemment décrit. Le groupe moto-ventilateur 1 est positionné en vis-à-vis du radiateur 5 avec l'ouverture 6 de sa buse 3 couvrant une grande partie de la surface en vis-à-vis du radiateur 5.

Dans une forme de réalisation particulièrement avantageuse de la présente invention, le groupe moto-ventilateur 1 peut être adapté aux dimensions du radiateur 5 en restant en grande partie inchangée mais en adaptant seulement les dimensions de l'écran thermique 4 à au moins une dimension du radiateur 5, les autres dimensions de la buse 3 restant par ailleurs inchangées. Ainsi, on peut utiliser une buse 3 standard pour différents types de radiateur 5, seul l'écran thermique 4 changeant de dimension afin de réaliser l'adaptation du groupe moto-ventilateur 1 au radiateur 5.

L'invention concerne aussi un véhicule automobile à moteur thermique comprenant un ensemble comprenant un radiateur 5 et un groupe moto-ventilateur 1 tel que décrits précédemment. Le radiateur 5 sert à l'échange thermique avec le liquide de refroidissement de son moteur thermique en circulation dans le radiateur 5 et donc à l'évacuation des calories de ce liquide de refroidissement.

Ce radiateur 5 est fréquemment fixé en façade avant du véhicule automobile pour recevoir plus facilement l'air extérieur lors du déplacement du véhicule automobile.

L'invention n'est nullement limitée aux modes de réalisation décrits et illustrés qui n'ont été donnés qu'à titre d'exemples.

## Revendications

1. Groupe moto-ventilateur (1) destiné à être associé à un radiateur (5) d'un moteur thermique de véhicule automobile, le groupe moto-ventilateur (1) comprenant un ventilateur (2) logé dans une buse (3) présentant des portions de guidage (3b, 3c) d'air, lesdites portions de guidage de la buse étant en matériau polymère, et un écran thermique (4) de protection d'une zone de la buse (3), **caractérisé en ce que** la buse (3) intègre l'écran thermique (4) qui est métallique et qui fait office de portion de guidage d'air de la buse (3) dans cette zone.

2. Groupe moto-ventilateur (1) selon la revendication 1, dans lequel la buse (3) présente une ouverture (6) prolongée par les portions de guidage d'air (3b, 4) se rétrécissant vers un goulet d'étranglement (3d), le ventilateur (2) étant logé dans ledit goulet d'étranglement (3d).

3. Groupe moto-ventilateur (1) selon la revendication 2, dans lequel le goulet (3d) est de section sensiblement circulaire.

4. Groupe moto-ventilateur (1) selon la revendication 2 ou 3, dans lequel le ventilateur (2) occupe en section la totalité du goulet d'étranglement (3d) en étant positionné à l'entrée du goulot (3d) dirigée vers l'ouverture (6) et en ne laissant entre lui et le goulet (3d) que le jeu suffisant à son introduction dans le goulet (3d).

5. Groupe moto-ventilateur (1) selon l'une quelconque des revendications 2 à 4, dans lequel la portion des parois de la buse qui est remplacée par l'écran thermique (4) s'étend en partant du goulet d'étranglement (3d) jusqu'à l'ouverture (6) de la buse (3).

6. Groupe moto-ventilateur (1) selon la revendication 5, dans lequel la buse (3) présente une forme dissymétrique.

7. Radiateur (5) de véhicule automobile **caractérisé en ce qu'**il est muni d'un groupe moto-ventilateur (1) selon l'une quelconque des revendications précédentes, le groupe moto-ventilateur (1) étant positionné en vis-à-vis du radiateur (5).

8. Radiateur selon la revendication précédente, dans lequel l'adaptation du groupe moto-ventilateur (1) aux dimensions du radiateur (5) se fait en adaptant les dimensions de l'écran thermique (4), les dimensions de la buse (3) restant inchangées.

9. Véhicule automobile à moteur thermique, **caractérisé en ce qu'**il comprend un radiateur (5) selon l'une quelconque des revendications 7 ou 8, le radiateur (5) étant en échange thermique avec le liquide de refroidissement de son moteur thermique.

10. Véhicule automobile selon la revendication précédente, dans lequel le radiateur (5) est fixé en façade avant du véhicule.

## Patentansprüche

1. Lüftereinheit (1), der dazu bestimmt ist, mit einem Kühler (5) einer Brennkraftmaschine eines Kraftfahrzeugs assoziiert zu sein, wobei die Lüftereinheit (1) ein Gebläse (2) umfasst, das in einer Düse (3) untergebracht ist, die Luftführungsabschnitte (3b, 3c) aufweist, wobei die Führungsabschnitte der Düse aus Polymermaterial bestehen, und einen Wärmeschirm (4) zum Schutz einer Zone der Düse (3), **dadurch gekennzeichnet, dass** die Düse (3) den Wärmeschirm (4), der metallisch ist und als Luftführungsabschnitt der Düse (3) in dieser Zone dient, integriert.

2. Lüftereinheit (1) nach Anspruch 1, wobei die Düse (3) eine Öffnung (6) aufweist, die durch die Luftführungsabschnitte (3b, 4) verlängert ist, die sich zu einem Engpass (3d) verjüngen, wobei das Gebläse (2) in dem Engpass (3d) untergebracht ist.

3. Lüftereinheit (1) nach Anspruch 2, wobei der Engpass (3d) einen im Wesentlichen kreisförmigen Querschnitt aufweist.

4. Lüftereinheit (1) nach Anspruch 2 oder 3, wobei das Gebläse (2) im Querschnitt den gesamten Engpass (3d) belegt, indem es am Eingang des Engpasses (3d), der zu der Öffnung (6) gerichtet ist, positioniert ist, und zwischen ihm und dem Engpass (3d) nur das Spiel belässt, das für sein Einführen in den Engpass (3d) ausreicht.

5. Lüftereinheit (1) nach einem der Ansprüche 2 bis 4, wobei sich der Abschnitt der Wände der Düse, der durch den Wärmeschirm (4) ersetzt wird, ausgehend von dem Engpass (3d) bis zu der Öffnung (6) der Düse (3) erstreckt.

6. Lüftereinheit (1) nach Anspruch 5, wobei die Düse eine unsymmetrische Form aufweist.

7. Kühler (5) eines Kraftfahrzeugs, **dadurch gekennzeichnet, dass** er mit einer Lüftereinheit (1) nach einem der vorstehenden Ansprüche versehen ist, wobei die Lüftereinheit (1) gegenüber dem Kühler (5) positioniert ist.

8. Kühler nach dem vorstehenden Anspruch, wobei die Anpassung der Lüftereinheit (1) an die Maße des Kühlers (5) durch Anpassen der Maße des Wärmeschirms (4) erfolgt, wobei die Maße der Düse (3) unverändert bleiben.

9. Kraftfahrzeug mit Brennkraftmaschine, **dadurch gekennzeichnet, dass** es einen Kühler (5) nach einem der Ansprüche 7 oder 8 umfasst, wobei der Kühler (5) in Wärmeaustausch mit der Kühlflüssigkeit seiner Brennkraftmaschine steht.

10. Kraftfahrzeug nach dem vorstehenden Anspruch, wobei der Kühler (5) an der Frontseite des Fahrzeugs befestigt ist.

## Claims

1. A fan unit (1) intended to be associated with a radiator (5) of a heat engine of a motor vehicle, the fan unit (1) including a fan (2) housed in a nozzle (3) having air-guiding portions (3b, 3c), said guiding portions of the nozzle being made of polymer material, and a thermal screen (4) for protecting an area of the nozzle (3), **characterized in that** the nozzle (3) integrates the thermal screen (4) which is metallic and which acts as a portion for guiding air from the nozzle (3) in this area.

2. The fan unit (1) according to Claim 1, in which the nozzle (3) has an opening (6) extended by the air-guiding portions (3b, 4) narrowing towards a bottleneck (3d), the fan (2) being housed in said bottleneck (3d).

3. The fan unit (1) according to Claim 2, in which the bottleneck (3d) is of substantially circular section.

4. The fan unit (1) according to Claim 2 or 3, in which the fan (2) occupies in section the whole of the bottleneck (3d) by being positioned at the inlet of the bottleneck (3d) directed towards the opening (6) and by only allowing between it and the bottleneck (3d) the sufficient play for its introduction in the bottleneck (3d).

5. The fan unit (1) according to any one of Claims 2 to 4, in which the portion of the walls of the nozzle which is replaced by the thermal screen (4) extends starting from the bottleneck (3d) up to the opening (6) of the nozzle (3).

6. The fan unit (1) according to Claim 5, in which the nozzle (3) has an asymmetrical shape.

7. A radiator (5) of a motor vehicle, **characterized in that** it is provided with a fan unit (1) according to any one of the preceding claims, the fan unit (1) being positioned facing the radiator (5).

8. The radiator according to the preceding claim, in which the adaptation of the fan unit (1) to the dimensions of the radiator (5) is carried out by adapting the dimensions of the thermal screen (4), with the dimensions of the nozzle (3) remaining unchanged.

9. A motor vehicle with a heat engine, **characterized in that** it includes a radiator (5) according to any one of Claims 7 or 8, the radiator (5) being in thermal exchange with the cooling liquid of its heat engine.

10. The motor vehicle according to the preceding claim, in which the radiator (5) is fixed at the front face of the vehicle.
